# EUROPEAN PATENT APPLICATION

(11) **EP 1 217 228 A1**
(43) Date of publication of application: **26.06.2002**
(21) Application number: 01129353.7
(22) Date of filing: 17.12.2001
(51) Int. Cl.: F16B 19/05, F16B 43/00

(54) **Method for manufacturing threaded connection units with retaining bush, with high operating safety**

(30) Priority: 21.12.2000 IT MI002789
(71) Applicant: C.V.B. S.r.l., 13040 Borgo d'Ale (Vercelli) (IT)
(72) Inventor: Caldera, Massimo, 13040 Borgo D'Ale (Prov. of Vercelli) (IT)
(74) Representative: Modiano, Guido, Dr.-Ing.

(57) **Abstract**

A method for manufacturing threaded connection units with a retaining bush, with high operating safety, comprising, starting from a pair of intermediate components comprising a screw (1) and a bush (5), the steps of inserting the screw in the bush and then permanently deforming the bush (5) so as to form a circumferentially continuous stroke limiter for the axial sliding of the screw (1).

## Description

The present invention relates to a method for manufacturing threaded connection units with a retaining bush, with high operating safety.

In order to connect two parts of a structure, it is known to use connection units composed of two fundamental parts: a screw, which provides the actual connection, and a bush, which is meant to be rigidly coupled in a hole provided in one of the two parts to be connected, in order to provide a seat for the screw. The application of the bush can have several purposes. In particular, one of such purposes is to prevent the extraction of the screw from the bush, for example in order to avoid losing the screw when the connection is temporarily removed.

For this purpose, it is known to use particular connecting units, in which the screw has a smooth shank and has a radial locator, which abuts against a stroke limiter formed on the internal surface of the bush, so that the screw cannot be extracted completely. In order to produce these connection units, both the radial locator and the stroke limiter have inclined surfaces in order to slide on each other in a single direction, so that it is possible to insert by pushing the screw in the bush despite the interference between the outside diameter of the locator and the inside diameter of the stroke limiter.

However, this embodiment does not ensure retention of the screw owing to the inherent deformability of the stroke limiter, which is due to the need to make the locator formed on the screw pass beyond the stroke limiter during production and assembly, when the screw is inserted in the bush.

It is also known to use particular deformable bushes, which have tabs at the end where the head of the screw engages; said tabs, under the thrust of the head during the assembly of the connection, bend plastically so as to form the stroke limiter.

However, even this method is not devoid of drawbacks. First of all the tabs, in the same way in which they are bent by the compression applied by the head, can be straightened by traction applied by the locator, with the result that the screw is not retained safely by the bush. Secondly, this method, too, entails providing an inherently weak stroke limiter.

The aim of the invention is to solve the above cited problems, by providing a method for producing threaded connection units with a retaining bush, with high operating safety, which ensures the maximum capacity of the bush to retain the screw.

Within the above aim, an object of the invention is to provide a method for producing threaded connection units with a retaining bush, in which the stroke limiter does not need to be deformed by the screw in order to produce assembly.

Another object of the invention is to provide a method for producing threaded connection units with a retaining bush whose production costs are lower than that of the known art.

Another object of the present invention is to provide a threaded connection unit with a retaining bush which, thanks to its particular constructive characteristics, is capable of giving the greatest assurances of reliability and safety in use, can be easily obtained starting from commonly commercially available elements and materials, and is also competitive from a merely economical standpoint.

This aim and these and other objects which will become better apparent hereinafter are achieved by a method for producing threaded connection units with a retaining bush, with high operating safety, according to the invention, characterized in that it comprises the steps of: starting from a pair of intermediate components comprising a screw and a bush, inserting said screw in said bush; and permanently deforming said bush so as to form a circumferentially continuous stroke limiter for the axial sliding of said screw within said bush.

Further characteristics and advantages of the invention will become better apparent from the description of a preferred but not exclusive embodiment of the threaded connection unit with retaining bush, with high operating safety, illustrated only by way of non-limitative example in the accompanying drawings, wherein:

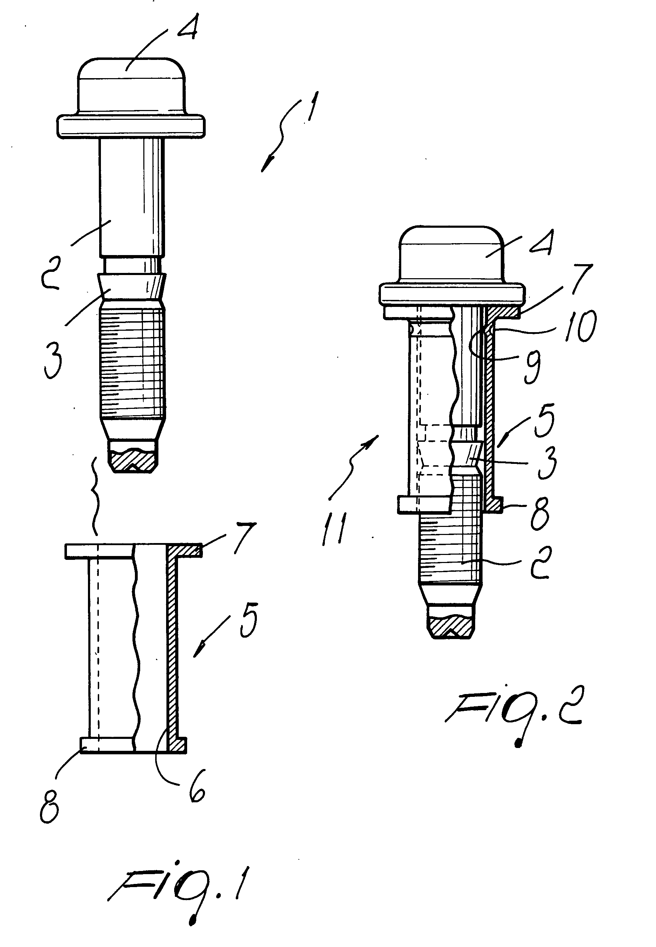

Figure 1 is an exploded and partially sectional lateral elevation view of the connection unit according to the invention, in which the bush has not been treated yet;
Figure 2 is a partially sectional side elevation view of the complete connection unit;

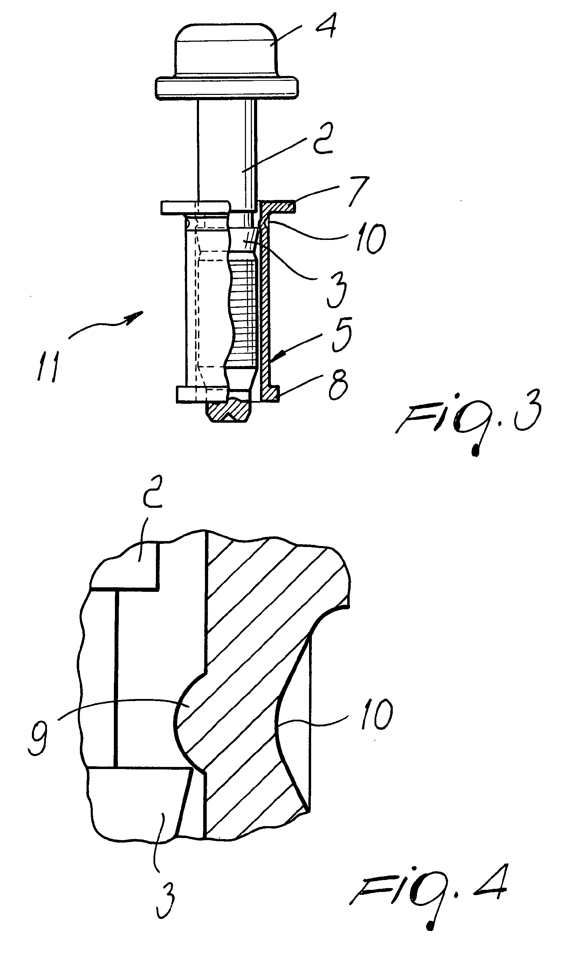

Figure 3 is a partially sectional side elevation view of the connection unit, with the locator engaged against the stroke limiter;
Figure 4 is an enlarged-scale sectional view of the locator engaged against the stroke limiter.

With reference to the figures, the method for producing threaded connection units with a retaining bush, with high operating safety, starts from two intermediate components. First of all a screw 1, which is per se known, is composed of a partially threaded shank 2 which has a tightening head 4 and a locator 3, which protrudes radially in an intermediate region and is constituted for example by a frustum-shaped flared portion that diverges toward the head 4. The second intermediate component is a bush 5, which has a bore 6 provided with a cylindrical and smooth inside wall which can slidingly accommodate the screw 1 with radial play; the bush 5 has, at one end, a flange 7, which is arranged so as to be directed toward the head 4 of the screw, and has, at its opposite end, a portion 8 in which the outer surface has an increased diameter.

The method according to the invention provides for the following steps, which consist in: inserting the screw 1 in the bush 5 with radial play; then permanently deforming the bush 5 and producing a circumferentially continuous stroke limiter 9 for the axial sliding of the screw 1. This deformation is conveniently provided by a radial compression applied to the outer surface of the bush 5 and induced for example by means of a plastic rolling process, which forms the radial stroke limiter 9, which protrudes from the inner surface of the bush 5.

More particularly, rolling generates a recess 10 on the outer surface of the bush 5 and a respective protrusion on the inner surface of the bush 5; such protrusion forms the stroke limiter 9. The bush 5 is deformed until the inside diameter of the stroke limiter 9 becomes smaller than the outside diameter of the locator 3. Rolling is performed by using flat forming racks or rollers, which generate a recess 10 with a knurled surface. The process is preferably but not exclusively limited to an annular region located at the end of the bush that is directed toward the head 4 of the screw.

The result of the process is a connection unit, generally designated by the reference numeral 11, in which the screw 1 can slide in the bush 5 until the locator 3 makes contact with the stroke limiter 9. The advantages of the invention arise from the fact that the stroke limiter 9 is stronger than known models: it is in fact not designed to be deformable during use. This strength is achieved by forming the stroke limiter 9 after the screw 1 has been inserted in the bush 5 and by maintaining large resisting sections after rolling. In known bushes with bending tabs, the resisting section of the stroke limiter must instead be reduced in order to allow the head of the screw to deform it.

In practice it has been found that the invention fully achieves the intended aim and objects, since it allows to manufacture connection units with the greatest assurances against extraction and loss of the screw; the resulting stroke limiter is furthermore substantially not deformable by the locator.

Another advantage is the low production cost, which arises from the geometric and constructive simplicity of the bush used with respect to the known art.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2000A002789 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for producing threaded connection units with a retaining bush, with high operating safety, according to the invention, **characterized in that** it comprises the steps of: starting from a pair of intermediate components comprising a screw (1) and a bush (5), inserting said screw in said bush; and permanently deforming said bush so as to form a circumferential continuous stroke limiter (9) for the axial sliding of said screw (1) within said bush (5).

2. The method for producing threaded connection units with a retaining bush, according to claim 1, **characterized in that** the deformation of said bush (5) occurs by compression on its outer surface.

3. The method for producing threaded connection units with a retaining bush, according to claim 1, **characterized in that** the deformation of said bush (5) is radial, so that said stroke limiter protrudes from the inner surface of said bush.

4. The method for producing threaded connection units with a retaining bush, according to claim 1, **characterized in that** said screw (1) has an at least partially threaded shank (2), which has a tightening head (4) at one end, said shank having a locator (3) which protrudes radially, said bush (5) forming a bore (6) in which said screw can be accommodated with radial play.

5. The method for producing threaded connection units with a retaining bush according to claim 1, **characterized in that** the deformation of said bush (5) occurs in an annular region.

6. The method for producing threaded connection units with a retaining bush according to claim 4, **characterized in that** the deformation of said bush (5) occurs at an end thereof directed toward said head (4) of the screw (1).

7. The method for producing threaded connection units with a retaining bush according to claim 1, **characterized in that** the deformation of said bush (5) is performed by rolling.

8. The method for producing threaded connection units with a retaining bush according to claim 1, **characterized in that** the deformation of said bush (5) produces a knurled recess (10) on the outer surface of said bush (5).

9. The method for producing threaded connection units with a retaining bush according to claim 7, **characterized in that** said rolling is performed by using flat forming racks or rollers.

10. A threaded connection unit with retaining bush with high operating safety, comprising a connecting screw (1), provided with an at least partially threaded shank (2) which has a tightening head (4) at one end, said shank having a locator (3) which protrudes radially, said connection unit further comprising a bush (5) which slidingly accommodates said screw (1) and has a radial stroke limiter (9) for said locator formed on said screw, **characterized in that** said stroke limiter (9) is formed by a circumferentially continuous permanently deformed portion of the external surface of the bush (5) which causes a deformed portion of the internal surface of said bush.

11. A threaded connection unit with retaining bush according to claim 10, **characterized in that** said bush (5) has a knurled recess (10) on its outer surface.

12. The threaded connection unit with retaining bush according to claim 10, **characterized in that** said locator (3) is frustum-shaped and diverges toward the head (4) of said screw.

13. The threaded connection unit with retaining bush according to claim 10, **characterized in that** said bush (5) has a flange (7) arranged at the end that is directed toward said head (4) of the screw (1).

14. The threaded connection unit with retaining bush according to claim 10, **characterized in that** the external surface of said bush (5) has a portion with an increased diameter at the end that lies furthest from said head of the screw.
